(19) Europäisches Patentamt / European Patent Office / Office européen des brevets

(11) EP 3 878 916 A1

(12) EUROPÄISCHE PATENTANMELDUNG
veröffentlicht nach Art. 153 Abs. 4 EPÜ

(43) Date of publication:
**15.09.2021 Bulletin 2021/37**

(51) Int Cl.:
**C09D 201/00** (2006.01) **C09D 7/65** (2018.01)

(21) Application number: **19882471.6**

(86) International application number:
**PCT/JP2019/044131**

(22) Date of filing: **11.11.2019**

(87) International publication number:
**WO 2020/096071 (14.05.2020 Gazette 2020/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2018 JP 2018211489**

(71) Applicant: **NITTO DENKO CORPORATION**
**Ibaraki-shi**
**Osaka 567-8680 (JP)**

(72) Inventors:
• **KOTAKE Shinya**
**Ibaraki-shi, Osaka 567-8680 (JP)**
• **MATSUKUMA Daisuke**
**Ibaraki-shi, Osaka 567-8680 (JP)**
• **EGUCHI Kenichi**
**Ibaraki-shi, Osaka 567-8680 (JP)**
• **ISHII Aika**
**Ibaraki-shi, Osaka 567-8680 (JP)**
• **FUJITA Hiroyuki**
**Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **COATING MATERIAL AND FILM**

(57) The purpose of the present invention is to provide a product, in particular, a coating material capable of preventing icing and/or snow accretion. This product includes a first oil component, a second oil component, and a first resin precursor, which is a precursor for a resin component. The first resin precursor including the first and second oil components is cured to form an oil-containing resin layer including the first and second oil components and the resin component. The second oil component constitutes a low-temperature phase-separable oil component that may be phase-separated from the first oil component to exude from the oil-containing resin layer when a temperature decreases to a predetermined value or lower.

## FIG.1

OIL-CONTAINING RESIN LAYER — 11

STRUCTURE — 10

## Description

Technical Field

The present invention relates to coating materials, in particular a coating material and a film capable of preventing icing and/or snow accretion.

Background Art

Several products have been developed that can prevent icing and/or snow accretion on various structures such as the roofs of houses, power lines, mats, vehicles, or ships.

For instance, Japanese Patent Laid-Open No. 07-148879 (Patent Literature 1) discloses an ice coated snow-adhesion preventive sheet that can prevent attachment of ice coated snow to various structures in cold regions. This sheet includes a heat insulated layer consisting of a sponge material and a front surface layer laminated on the heat insulated layer, wherein the front surface layer is formed of rubber or resin dispersed so that lubricant can be bled on its surface. The lubricant is kept in the front surface layer and can be bled constantly on the surface of the front surface layer. Meanwhile, to prevent marked bleeding-out of the lubricant, the viscosity of the lubricant is set to a prescribed value or higher to maintain the ice coated snow adhesion preventive effect as long as possible.

Japanese Patent Laid-Open No. 2003-328308 (Patent Literature 2) discloses a rubber mat that can prevent the accretion of ice/snow. This rubber mat is made of synthetic rubber with a prescribed hardness, and is configured such that under conditions at a temperature of 5°C or lower, a liquid additive having the effect of preventing an ice/snow from accreting on the surface can be bled. To adjust the bleeding level of the liquid additive, the amount of liquid additive with respect to the rubber in the rubber mat is adjusted to be within a prescribed range.

Japanese Patent No. 6245714 (Patent Literature 3) discloses a wet gel which has anti-adhesion properties against ice and in which spontaneous syneresis can be caused by, for instance, a temperature or chemical reaction. This wet gel comprises: a crosslinked silicone resin in which a silicone resin composition is solidified; a first liquid capable of dissolving the silicone resin composition; and a second liquid capable of being mixed with the first liquid (i.e., when the second liquid and the first liquid are mixed, no phase separation occurs and a transparent mixture is obtained). Provided that the first liquid may be doubled as the second liquid.

Citation List

Patent Literature

  Patent Literature 1: Japanese Patent Laid-Open No. 07-148879
  Patent Literature 2: Japanese Patent Laid-Open No. 2003-328308
  Patent Literature 3: Japanese Patent No. 6245714

Summary of Invention

Technical Problem

However, in the configuration disclosed in the above Patent Literature 1, the lubricant continues bleeding regardless of the temperature, which makes it difficult to achieve a prolonged effect of preventing the ice coated snow adhesion. Also, although there is a concern about excessive bleeding of the lubricant, the bleeding does not necessarily occur smoothly in a case where the preset viscosity of the lubricant is too high. Further, all the lubricant dispersed on the front surface layer can be bled, and as a result of which the lubricant may be bled excessively.

In addition, in the configuration disclosed in the above Patent Literature 2, the level of bleeding of the liquid additive can be controlled depending on the temperature conditions. However, all the liquid additive added to the rubber in the rubber mat can be bled, and as a result of which the liquid additive may be bled excessively.

Furthermore, in the configuration disclosed in Patent Literature 3, the wet gel is not intended for outdoor use, etc., where the strength is required, causing a problem of insufficient strength. In addition, because the first liquid and the second liquid can be mixed and the first liquid may be doubled as the second liquid, the first liquid and the second liquid may be subject to simultaneous or excessive syneresis.

The present invention addresses these problems in the conventional art. The purpose of the present invention is to provide a product, in particular, a coating material and a film having an improved function of preventing icing and/or snow accretion.

Solution to Problem

To solve the above problems, an aspect of the present invention provides a coating material including a first oil component, a second oil component, and a first resin precursor that is a precursor for a resin component, wherein the first resin precursor including the first and second oil components is cured to form an oil-containing resin layer including the first and second oil components and the resin component; and the second oil component constitutes a low-temperature phase-separable oil component that may be phase-separated from the first oil component to exude from the oil-containing resin layer when a temperature decreases to a predetermined value or lower. Here, the predetermined value may be the freezing point.

The coating material of this aspect allows the use in a flexible form. In addition, this oil component exuding from the oil-containing resin layer is a low-temperature exuding oil component that can bleed when the temperature decreases to a predetermined value or lower. This causes no useless bleeding and causes bleeding when needed, thereby capable of reliably preventing, for instance, ice/snow accretion. Further, since this oil component is part of oil components included in the oil-containing resin layer, excessive bleeding of the oil component hardly occurs.

The first and second oil components in the coating material of the above aspect are configured such that a difference between a solubility parameter value (SP value) for a resin component in the oil-containing resin layer, which is formed by curing the first resin precursor, and a solubility parameter value for the first oil component is preferably smaller than a difference between a solubility parameter value (SP value) for the resin component in the oil-containing resin layer and a solubility parameter value for the second oil component.

Meanwhile, the first resin precursor in the coating material of the above aspect may be a wet curable material that is cured by moisture, a UV curable material that is cured by UV irradiation, a heat curable material that is cured by heating, a material that is cured by adding a curing agent, which causes a cross-linking reaction with the first resin precursor, or a combination with a liquid curing agent, which cures the first resin precursor through a cross-linking reaction with the first resin precursor in the coating material.

Further, it is preferable that in the coating material of the above aspect, the content of the resin component in the oil-containing resin layer be 25 wt% or more based on the total weight of the oil-containing resin layer.

In addition, it is preferable that in the coating material of the above aspect, the content of the second oil component be 3 wt% or more based on the total weight of the oil-containing resin layer.

In addition, the coating material of the above aspect may further include a second resin precursor used to form a surface resin layer by curing on the oil-containing resin layer formed by curing the first resin precursor, wherein the surface resin layer has enough oil permeability to permeate a low-temperature phase-separable oil component exuding from the oil-containing resin layer to a surface of the surface resin layer that is opposite to a side of the oil-containing resin layer.

In addition, it is preferable that in the coating material of the above aspect, the surface resin layer have higher wear resistance than the oil-containing resin layer.

Also, in the coating material of the above aspect, the surface oil level at - 20°C is preferably 40 $\mu$g/cm$^2$ or higher.

Further, in the coating material of the above aspect, a difference in solubility parameter between the first oil component and the resin component in the oil-containing resin layer is preferably within 0.6 (J/cm$^3$)$^{1/2}$.

In addition, in the coating material of the above aspect, the wettability parameter, which can be calculated as an absolute value for a difference between a solubility parameter value (SP value) for the oil-containing resin layer formed by curing the first resin precursor and a solubility parameter value (SP value) for the second oil component, is preferably 1.5 (J/cm$^3$)$^{1/2}$ or lower.

In addition, in the coating material of the above aspect, the solubility parameter contribution of the oil-containing resin layer formed by curing the first resin precursor is preferably 0.1 or higher.

To solve the above problems, a film according to one aspect of the present invention is a film including an oil-containing resin layer including first and second oil components, wherein the second oil component constitutes a low-temperature phase-separable oil component that may be phase-separated from the first oil component to exude from the oil-containing resin layer when a temperature decreases to a predetermined value or lower.

Advantageous Effects of Invention

The present invention provides a product capable of preventing icing and/or snow accretion, in particular, a coating material and a film that can be used in a more flexible form than a sheet and others having a physically fixed shape from the beginning of use.

Brief Description of Drawings

[Figure 1] Fig. 1 is a diagram illustrating an oil-containing resin layer, with a structure, formed from a coating material according to an embodiment of the present invention.
[Figure 2] Fig. 2 is a diagram illustrating a layer configuration, with a structure, including a surface resin layer formed from a coating material according to an embodiment of the present invention.
[Figure 3] Fig. 3 is light microscope images obtained by photographing a state of oil appearing on a surface of an oil-containing resin layer.
[Figure 4] Fig. 4 is a schematic view of a tester used for a wear resistance test.

Description of Embodiments

Hereinafter, preferred embodiments of the present invention will be described. However, the present invention is not limited to the following embodiments.

1. Types of Coating Material

(1) First Coating Material

A first coating material includes a first resin precursor, which is a precursor for a resin component, and two types of oil component, namely, a first oil component and a second oil component. The first resin precursor including the first oil component and the second oil component is cured to form an oil-containing resin layer 11. The oil-containing resin layer 11 contains the first oil component, the second oil component, and the resin component, and is a solid resin layer in which part of oils included, in particular, the second oil component can exude (bleed) from the resin component. Thus, this second oil component exuded is used to prevent icing and/or snow accretion.

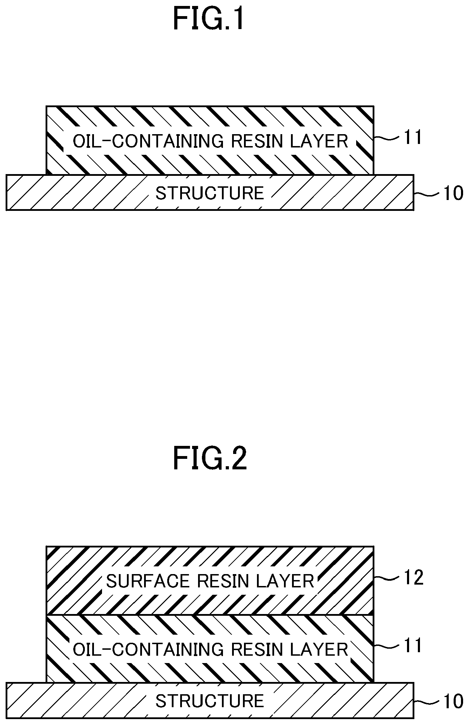

Fig. 1 shows the oil-containing resin layer 11, with a structure 10, formed by applying and curing the first coating material. The layer thickness of the oil-containing resin layer 11 can be approximated by the thickness of the first coating material applied. To exude the oil appropriately, the thickness is not particularly limited, and is preferably 10000 $\mu$m or less and, from the viewpoint of strength, preferably 10 $\mu$m or more.

<First Resin precursor>

The first resin precursor is a precursor including a resin component for the oil-containing resin layer 11, and may be any of a wet curable material that is cured by moisture content, a UV curable material that is cured by UV irradiation, or a heat curable material that is cured by heating. In addition, the first resin precursor may be a material that is cured by adding a curing agent, which causes a cross-linking reaction with the first resin precursor. Further, the first resin precursor may be a combination of a coating material cured by adding a curing agent, which causes a cross-linking reaction with a first resin precursor, and a liquid curing agent, which cures the first resin precursor through a cross-linking reaction with the first resin precursor in the coating material.

Examples of the first resin precursor include, but are not particularly limited to, silicone resin, polyurethane resin, polyurethane acrylic resin, vinyl chloride resin, polyester resin, elastomers, fluororesin, polyamide resin, polyolefin resin (e.g., polyethylene, polypropylene), or acrylic resin. From the viewpoint of an oil component bleeding effect and excellent outdoor exposure durability, a silicone resin is preferred among them.

As the silicone resin, any suitable silicone resin is acceptable as long as the effects of the present invention are not impaired. Just one type of silicone resin may be used, or two or more types of silicone resin may be used. Such a silicone resin may be a condensed silicone resin or an addition-type silicone resin. In addition, such a silicone resin may be a one-component silicone resin to be dried alone (e.g., a one-component room-temperature vulcanizing (RTV) resin) or a two-component silicone resin (e.g., a two-component room-temperature vulcanizing (RTV) resin).

Examples of the silicone resin include: one-component RTV rubber, manufactured by Shin-Etsu Chemical Co., Ltd., (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, KE-45S); two-component RTV rubber, manufactured by Shin-Etsu Chemical Co., Ltd., (e.g., KE-1800T-A/B, KE-66, KE-1031-A/B, KE-200, KE-118, KE-103, KE-108, KE-119, KE-109E-A/B, KE-1051J-A/B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE-26, KE-1414, KE-1415, KE-1416, KE-1417, KE-1300T, KE-1310ST, KE-1314-2, KE-1316, KE-1600, KE-1603-A/B, KE-1606, KE-1222-A/B, KE-1241); a silicone sealant, manufactured by Shin-Etsu Chemical Co., Ltd., (e.g., KE-42AS, KE-420, KE-450); a rubber compound, manufactured by Shin-Etsu Chemical Co., Ltd., (e.g., KE-655-U, KE-675-U, KE-931-U, KE-941-U, KE-951-U, KE-961-U, KE-971-U, KE-981-U, KE-961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE-561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE-5634-U, KE-7511-U, KE-7611-U, KE-765-U, KE-785-U, KE-7008-U, KE-7005-U, KE-503-U, KE-5042-U, KE-505-U, KE-6801-U, KE-136Y-U); LIMS (liquid silicone rubber injection molding system), manufactured by Shin-Etsu Chemical Co., Ltd., (e.g., KEG-2000-40A/B, KEG-2000-50A/B, KEG-2000-60A/B, KEG-2000-70A/B, KEG-2001-40A/B, KEG-2001-50A/B, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-1935A/B, KE-1987A/B, KE-1988A/B, KE-2019-40A/B, KE-2019-50A/B, KE-2019-60A/B, KE-2017-30A/B, KE-2017-40A/B, KE-2017-50A/B, KE-2090-40A/B, KE-2090-50A/B, KE-2090-60A/B, KE-2090-70A/B, KE-2096-40A/B, KE-2096-50A/B, KE-2096-60A/B); a LR7665 series, manufactured by Wacker Asahikasei Silicone Co., Ltd.; a LR3033 series, manufactured by Wacker Asahikasei Silicone Co., Ltd.; a TSE3032 series and others, manufactured by Momentive Performance Materials Inc.; or Sylgard 184 and others, manufactured by Dow Corning Toray Co., Ltd.

<Oil component>

Examples of the first oil component include silicone oil, fluorine oil, hydrocarbon-based oil, polyether-based oil, ester-based oil, phosphorus compound-based oil, or mineral oil-based oil.

Examples of the silicone oil include: silicone oil, manufactured by Shin-Etsu Chemical Co., Ltd., (e.g., KF96L series, KF96 series, KF69 series, KF99 series, KF50 series, KF54 series, KF410 series, KF412 series, KF414 series, FL series, KF-6000, KF-6001, KF-6002, KF-6003); silicone oil, manufactured by Momentive Performance Materials Inc., (e.g., Element14 * PDMS series, TSF404 series, TSF410 series, TSF4300 series, TSF431 series, TSF433 series, TSF437 series, TSF4420 series, TSF4421 series); silicone oil, manufactured by Dow Corning Toray Co., Ltd., (e.g., BY16-846 series, SF8416 series, SH200 series, SH203 series, SH230 series, SF8419 series, FS1265 series, SH510 series, SH550 series, SH710 series, FZ-2110 series, FZ-2203 series); or silicone oil, manufactured by Wacker Asahikasei Silicone Co., Ltd., (e.g., WACKER (registered trademark) SILICONE FLUID AK series, WACKER (registered trademark) SILICONE FLUID AP series, WACKER (registered trademark) SILICONE FLUID AR series, WACKER (registered trademark) SILICONE FLUID AS series, WACKER (registered trademark) TN series, WACKER (registered trademark) L series, WACKER (registered trademark) AF series).

Meanwhile, examples of the second oil component that can be used include silicone oil, fluorine oil, hydrocarbon-based oil, polyether-based oil, ester-based oil, phosphorus compound-based oil, or mineral oil-based oil.

Examples of the silicone oil include: silicone oil, manufactured by Shin-Etsu Chemical Co., Ltd., (e.g., KF96L series, KF96 series, KF69 series, KF99 series, KF50 series, KF54 series, KF410 series, KF412 series, KF414 series, FL series, KF-6000, KF-6001, KF-6002, KF-6003); silicone oil, manufactured by Momentive Performance Materials Inc., (e.g., Element14 * PDMS series, TSF404 series, TSF410 series, TSF4300 series, TSF431 series, TSF433 series, TSF437 series, TSF4420 series, TSF4421 series); silicone oil, manufactured by Dow Corning Toray Co., Ltd., (e.g., BY16-846 series, SF8416 series, SH200 series, SH203 series, SH230 series, SF8419 series, FS1265 series, SH510 series, SH550 series, SH710 series, FZ-2110 series, FZ-2203 series); or silicone oil, manufactured by Wacker Asahikasei Silicone Co., Ltd., (e.g., WACKER (registered trademark) SILICONE FLUID AK series, WACKER (registered trademark) SILICONE FLUID AP series, WACKER (registered trademark) SILICONE FLUID AR series, WACKER (registered trademark) SILICONE FLUID AS series, WACKER (registered trademark) TN series, WACKER (registered trademark) L series, WACKER (registered trademark) AF series).

A combination of the first oil component, the second oil component, and the resin component (first resin precursor) in the oil-containing resin layer 11 is selected to satisfy, for instance, the following characteristics 1) and 2).

1) The first oil component and the second oil component are not phase-separated and compatible at a temperature at which the second oil component is not required to exude into the oil-containing resin layer 11, for example, at an ordinary temperature of about 20°C to 80°C which is significantly higher than a predetermined value such as the freezing point; and they are phase-separated under an environment at a temperature at which the second oil component is required to exude into the oil-containing resin layer 11, for example, at a predetermined temperature (e.g., the freezing point) or lower.

2) The first oil component is miscible with the resin component of the oil-containing resin layer 11 both at a temperature at which the second oil component is not required to exude into the oil-containing resin layer 11 and at a temperature at which the second oil component is required to exude into the oil-containing resin layer 11; and by contrast, the second oil component changes behavior in the presence of the first oil component, depending on a temperature at which the second oil component is not required to exude into the oil-containing resin layer 11 or a temperature at which the second oil component is required to exude into the oil-containing resin layer 11.

More specifically, without the first oil component, the second oil component is immiscible with the resin component of the oil-containing resin layer 11 both at a temperature at which the second oil component is not required to exude into the oil-containing resin layer 11 and at a temperature at which the second oil component is required to exude into the oil-containing resin layer 11. In other words, the second oil component exudes from the resin component of the oil-containing resin layer 11. Meanwhile, in the presence of the first oil component, the second oil component is compatible with the first oil component at a temperature at which the second oil component is not required to exude into the oil-containing resin layer 11. Thus, the second oil component is miscible with the resin component in the oil-containing resin layer 11. In other words, the second oil component does not exude therefrom. By contrast, the second oil component is immiscible with the resin component of the oil-containing resin layer 11 because phase-separated from the first oil component at a temperature at which the second oil component is required to exude into the oil-containing resin layer 11. In other words, the second oil component functions as a low-temperature phase-separable oil component that can be phase-separated from the first oil component.

The solubility parameter value is empirically known to be an indicator to determine how easily a solvent and a solute are mixed. The relationship among the first oil component, the second oil component, and the resin component of the oil-containing resin layer 11 (first resin precursor) as described above can also be explained based on the relationship among each solubility parameter value (SP value). As used herein, a Hansen solubility parameter as the solubility parameter. This value can be determined by subjecting the first oil component, the second oil component, and the resin component of the oil-containing resin layer 11 to Fourier transform nuclear magnetic resonance spectrometry, examining the type of molecular unit constituting the molecular structure of each component and their molar ratio, and calculating a Hansen solubility parameter for each molecular unit type as weight-averaged using the molar ratio. The Hansen solubility parameter for each molecular unit type can be determined by the molecular group contribution method using software "HSPiP, Hansen Solubility parameters in Practice ver4" available in the link (https://hansen-solubility.com/). Specifically, each constituent unit in a substance of interest is input using the SMILES notation, and the HSP values ($\delta_d$, $\delta_p$, $\delta_h$) for each unit can be calculated.

To keep the relationship between the above characteristics 1) and 2), the difference between the solubility parameter value for the resin component in the oil-containing resin layer 11 and the solubility parameter value for the first oil component is preferably set to be at least smaller than the difference between the solubility parameter value for the resin component in the oil-containing resin layer 11 and the solubility parameter value for the second oil component. In addition, to keep the relationship between the above characteristics 1) and 2), the blending proportion is set such that for instance, the content of the resin component is at least 25 wt% or more, the content of the first oil component is at least 5 wt% or more, and the content of the second oil component is at least 3 wt% or more based on the total weight of the finally formed oil-containing resin layer. Further, the difference in solubility parameter between the first oil component and the resin component in the oil-containing resin layer 11 is preferably set to be within 0.6 $(J/cm^3)^{1/2}$.

More specifically, the weight of the resin component in the oil-containing resin layer 11 based on the total weight of the finally formed oil-containing resin layer is preferably 30 wt% or higher, more preferably 35 wt% or higher, and still more preferably 40 wt% or higher. The upper limit is not particularly limited and set, if appropriate, in view of the oil component, and may be, for instance, 70 wt% or lower.

In addition, the weight of the first oil component based on the total weight of the finally formed oil-containing resin layer may be set to be, for instance, 10 wt% or higher, 15 wt% or higher, or 20 wt% or higher. The upper limit is not particularly limited and may be set to be preferably 65 wt% or lower, such as 50 wt% or lower, 40 wt% or lower, 30 wt% or lower, or 20 wt% or lower.

In addition, the weight of the second oil component based on the total weight of the finally formed oil-containing resin layer is preferably 5 wt% or higher, more preferably 10 wt% or higher, and still more preferably 15 wt% or higher. The upper limit is not particularly limited and may be set to be preferably 62 wt% or lower, such as 60 wt% or lower, 50 wt% or lower, 40 wt% or lower, or 30 wt% or lower.

If the relationship between above 1) and 2) is met, for instance, the second oil component is compatible with the first oil component at a temperature at which the second oil component is not required to exude into the oil-containing resin layer 11, so that the second oil component does not exude from the surface of the oil-containing resin layer 11. By contrast, if the temperature changes to a temperature at which the second oil component is required to exude into the oil-containing resin layer 11, the second oil component can function as a low-temperature exuding oil component that can be phase-separated from the first oil component and can then exude (bleed) from a surface of the oil-containing resin layer 11.

In addition, the wettability parameter "Z," which is expressed by the formula below and can be calculated as an absolute value for a difference between a solubility parameter value (SP value) $SP_1$ for the oil-containing resin layer formed by curing the first resin precursor and a solubility parameter value (SP value) $SP_2$ for the second oil component, is preferably 1.5 $(J/cm^3)^{1/2}$ or lower.

The wettability parameter "Z" is more preferably 0.8 $(J/cm^3)^{1/2}$ or lower, still more preferably 0.5 $(J/cm^3)^{1/2}$ or lower, and particularly preferably 0.3 $(J/cm^3)^{1/2}$ or lower. The lower limit of Z is not particularly limited if the value is higher than 0 $(J/cm^3)^{1/2}$, and may be set to, for instance, 0.001 $(J/cm^3)^{1/2}$ or higher and more preferably 0.01 $(J/cm^3)^{1/2}$ or higher. If Z is within such a range, the wettability of the second oil component bled into the oil-containing resin layer formed is high, so that even a small volume of the oil bled can spread efficiently over the surface of the oil-containing resin layer. This enables a smaller amount of oil to exert an icing preventive effect.

Note that the solubility parameter value for the oil-containing resin layer and the solubility parameter value for the second oil component can be calculated by the above-described method.

In addition, the below-described solubility parameter contribution "F" of the oil-containing resin layer formed by curing the first resin precursor is preferably 0.1 or higher. The contribution is more preferably 0.2 or higher, still more preferably 0.3 or higher, and particularly preferably 0.4 or higher. The upper limit may be, for instance, 3.0 or lower, preferably 2.5 or lower, more preferably 2.0 or lower, and still more preferably 1.5 or lower. The solubility parameter contribution "F" can be calculated by the below-described method. F represents the degree of compatibility of the oil-containing resin layer. As the value increases, the material is more incompatible. If the value is within the above range, the oil component included is more readily bled. Because of this, an increased effect of preventing icing can be achieved.

Note that here, an embodiment has been described as an example, in which icing and/or snow accretion can be prevented by exuding (bleeding) part of the oils included in the oil-containing resin layer 11, in particular, the second oil component while the difference between the solubility parameter value for the resin component in the oil-containing resin layer 11 and the solubility parameter value for the first oil component or the second oil component has a given relationship. The scope of the present invention is not limited to such an embodiment. For instance, the difference in molecular weight or the difference in molecular structure between the first oil component and the second oil component may be used to likewise control the compatibility. The second oil component may be phase-separated from the first oil component and then exude from the oil-containing resin layer when the temperature decreases to a predetermined value or lower.

As clear from the above description, the first oil component and the second oil component do not have to be distinguishable as a substance and suffice if they can be distinguished from each other from the aspects of the above described functions and actions. Hence, the first oil component and the second oil component do not have to be each included as one oil component. If the above relationship is met, each of the first and second oil components may contain a plurality of oil components.

(2) Second Coating Material

The second coating material includes at least a second resin precursor, which is a precursor for a resin component. Like the first coating material, this second coating material may further include two types of oil component, namely, a third oil component and a fourth oil component. The surface resin layer 12 including at least the resin component and further including the third oil component and the fourth oil component may be formed by forming an oil-containing resin layer using the first coating material, applying the second coating material on the oil-containing resin layer, and then curing the second resin precursor or curing the second resin precursor including the third oil component and the fourth oil component. Here, the third oil component and the fourth oil component are not necessarily included in the second coating material, but may be included in the first coating material. Thus, in the second coating material, use of the third oil component and the fourth oil component is optional.

The surface resin layer 12 that can be formed using the second coating material aims at protecting a surface of the oil-containing resin layer 11, and is a solid resin layer that can be provided while layered on one of surfaces of the oil-containing resin layer 11. The surface resin layer 12 is optionally provided so as to protect a surface of the oil-containing resin layer 11. Thus, use of the second coating material is optional. The surface resin layer 12 is disposed on a superficial layer of the oil-containing resin layer 11. Although covering the oil-containing resin layer 11, the surface resin layer 12 is required to have enough oil permeability to permeate the second oil component exuding from the oil-containing resin layer 11 to a surface of the surface resin layer 12 that is opposite to a side of the oil-containing resin layer 11 so as not to hinder the function of preventing icing and/or snow accretion through the second oil component stored in the oil-containing resin layer 11.

Fig. 2 shows layer configuration including the surface resin layer 12 formed by applying and curing the second coating material on the oil-containing resin layer 11, together with a structure 10. The structure 10 is arranged on the other surface of the oil-containing resin layer 11 that is opposite to the one surface on which the surface resin layer 12 is layered.

The second resin precursor is not particularly limited, and the same material for the first resin precursor of the first coating material may be used. In addition, the third oil component used may be the same material for the first oil component of the first coating material. Further, the fourth oil component used may be the same material for the second oil component of the first coating material.

Like the first oil component, the second oil component, and the resin component of the oil-containing resin layer 11 (the first resin precursor), the third oil component, the fourth oil component, and the resin component of the surface resin layer 12 (the second resin precursor) have the above characteristics 1) and 2). Thus, like in the first coating material, the blending ratio is at least set such that the content of the resin component is at least 25 wt% or more, the content of the third oil component is at least 5 wt% or more, and the content of the fourth oil component is at least 3 wt% or more based on the total weight of the finally formed surface resin layer. The other preferable values, for instance, may be like in the first oil component, etc., of the first coating material. Provided that the surface resin layer 12 is to be provided so as to protect a surface of the oil-containing resin layer 11, and has preferably higher wear resistance than the oil-containing resin layer 11. In this case, the wear resistance is higher than that of the oil-containing resin layer 11. Thus, the proportion of the second resin precursor in the second coating material is set to a value significantly larger than the proportion of the first resin precursor in the first coating material. For instance, it is preferable that the proportion of the resin component is 30 wt% or higher while the proportion of the third oil component is 20 wt% and the proportion of the fourth oil component is 10 wt% based on the total weight of the finally formed surface resin layer.

(3) Film

This film may be formed by curing, in advance, the first coating material or the first coating material and the second coating material while formed as a 10 to 1000-$\mu$m thin film. In this case, the film can be attached to various structures and others instead of applying the coating material. The film, like the coating material, is provided with an oil-containing resin layer including the first and second oil components. The second oil component functions as a low-temperature phase-separable oil component that may be phase-separated from the first oil component to exude from the oil-containing resin layer when a temperature decreases to a predetermined value or lower. As the resin component as a component of the oil-containing resin layer, for instance, a resin obtained by a cross-linking reaction with the first resin precursor as described in the "<First Resin precursor>" may be preferably used. Preferred is a crosslinked silicone resin. The first and second oil components used may be the above-described "<Oil component>." In addition, the blending ratio of each component is designed like in the above. As such, the first coating material and the second coating material may be used to provide a film.

2. Examples

Hereinbelow, the present invention will be described in more detail with reference to Examples about the first coating material used to form an oil-containing resin layer. However, the present invention is not limited to the following Examples.

[Example 1]

The first coating material was produced by the protocol below.

1) First Resin precursor

The first resin precursor used was dimethyl polysiloxane rubber (Sylgard 184, manufactured by Dow Corning Toray Co., Ltd.). This rubber is cured by heating (also see the below-described Table 3).

2) Oil components

The first oil component used was dimethyl siloxane oil (product# KF-96-100CS, manufactured by Shin-Etsu Chemical Co., Ltd. Silicone Division) and the second oil component used was methylphenyl siloxane oil (TSF437, manufactured by Momentive Performance Materials Inc.) (see the below-described Table 3).

3) Blending

The first resin precursor of 1) and the first oil component and the second oil component of 2) were mixed under conditions at 25°C and 101 kPa. The mixture was stirred using a spatula at a rate of about 120 rpm for 60 sec, and then further stirred with a rotation and revolution mixer (a CONDITIONING MIXER AR-250, manufactured by THINKY CORPORATION) for 60 seconds and degassed for 60 seconds to prepare a first coating material. The blending ratio was set such that the resin component accounted for 60 wt%, the first oil component accounted for 23 wt%, and the second oil component accounted for 17 wt% based on the total weight of the finally formed oil-containing resin layer.

Next, the first coating material obtained by the above procedure was applied onto a PET film (Lumirror S10#125, manufactured by Toray Industries, Inc.), and was cured by heating under an environment at 100°C for 3 h to form an oil-containing resin layer with a thickness of about 140 μm. Then, the resulting oil-containing resin layer was evaluated below. Here, the solubility parameter value for dimethyl siloxane oil as the first oil component is 11.7 $(J/cm^3)^{1/2}$, the solubility parameter value for methylphenyl siloxane oil as the second oil component is 13.9 $(J/cm^3)^{1/2}$, and, further, the solubility parameter value for dimethyl polysiloxane rubber as the resin component formed by curing the first resin precursor is 11.9 $(J/cm^3)^{1/2}$.

5) Evaluation

<Layer Thickness>

The layer thickness was measured using a film thickness meter MFC-101 (manufactured by Nikon Corporation).

In the case of providing a surface resin layer, the layer thickness of the surface resin layer is not particularly limited, and, in order to make the oil permeate easily to a surface of the surface resin layer, in other words, in order to secure oil permeability through the surface resin layer, is preferably 75% or less, more preferably 50% or less, and still more preferably 35% or less of the oil-containing resin layer. In addition, from the viewpoint of strength depending on the resin component in the surface resin layer, the layer thickness is preferably 5% or higher, more preferably 20% or higher, and still more preferably 30% or higher of the oil-containing resin layer.

<Phase Separation and Compatibility, etc.>

Evaluated were a) phase separation and compatibility between the "first oil component" and the "second oil component" in response to a temperature change; b) miscibility between the "first oil component" and the "resin component in the oil-containing resin layer" in response to a temperature change; and c) miscibility between the "second oil component" and the "resin component in the oil-containing resin layer" in response to a temperature change. It should be noted that a direct analyte was a mixture of the "first oil component" and the "second oil component" extracted from the oil-containing resin layer and the oil component bleeding from the surface of the oil-containing resin layer.

To evaluate the above a), the oil-containing resin layer was first immersed into toluene (manufactured by FUJIFILM Wako Pure Chemical Corporation) at 20°C for 24 h to extract the first oil component and the second oil component as a mixture. The first oil component or the second oil component in the mixture was separated by liquid-phase chromatography. For the extracted first oil component/second oil component mixture, the "transmittance at 20°C and 500 nm" and the "transmittance at 3°C and 500 nm" were each measured. Based on the proportion of the difference between the two transmittance values to the "transmittance at 20°C and 500 nm," whether they were "phase-separated (incompatible)" or "compatible (not phase-separated)" was determined. More specifically, if the difference was 10% or higher, they were evaluated to be "phase-separated (incompatible) in response to a temperature change"; and if the difference was less than 10%, they were evaluated to be "compatible (not phase-separated) in response to a temperature change." The transmittance was measured using a UV/visible spectrophotometer (V-750, manufactured by JASCO Corporation) set at a measurement wavelength of 500 nm, a scanning speed of 1000 nm/min, and a mixing rate of 400 rpm. The sample was set to 20°C or 3°C, allowed to stand for 10 min, and then measured.

The reference used was the air.

The criteria were as follows.

○ ··· 10% or higher
× ··· less than 10%

With regard to the above b) and c), the oil component-containing resin layer containing only one of each oil component in the oil component-extracted oil-containing resin layer was placed under an environment at 20°C or under an environment at 3°C. Each case was evaluated by determining whether or not the first oil component or the second oil component bled from the surface of the oil-containing resin layer.

The criteria were as follows.

○ ··· bleeding at any of 20°C or 3°C
× ··· no bleeding at any of 20°C or 3°C

<Surface Oil Level>

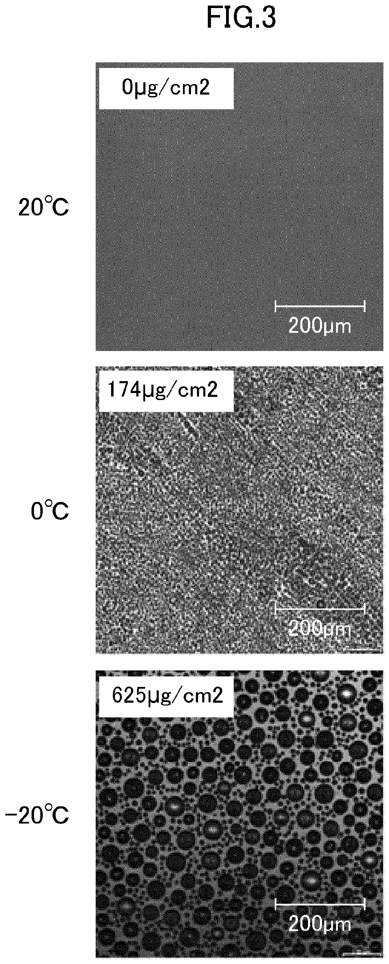

The measurement subject was the level of oil bleeding onto the surface of the oil-containing resin layer at each of 20°C, the freezing point 0°C, or - 20°C. When measured, the bleeding oil was confirmed to be primarily the second oil component. Fig. 3 is an example of light microscope images obtained by photographing a state of oil bleeding on a surface of an oil-containing resin layer.

The surface oil level was measured by the following method.

An oil-containing resin layer was cut, at or near the center region, into 10 cm x 2 cm size pieces, and the pieces were left for 16 h at a temperature of each of 20°C, 0°C, or - 20°C. At this time, the oil bleeding on the surface of the oil-containing resin layer was collected with a cell scraper (CSS-10, manufactured by KENIS, Ltd.) under an environment at a temperature of each of 20°C, 0°C, or - 20°C. The oil was absorbed until no change in the weight of oil absorbing paper (oil absorbing level) was observed. The oil collection using the cell scraper and absorption into the oil absorbing paper were repeated 7 times per min. The difference in weight of the oil absorbing paper between before and after the oil absorption was defined as the surface oil level. The test was triplicate, and the average value was calculated.

The criteria were as follows.

◎ ⋯ 300 $\mu$g/cm$^2$ or higher
○ ⋯ from 40 $\mu$g/cm$^2$ to less than 300 $\mu$g/cm$^2$
× ⋯ less than 40 $\mu$g/cm$^2$

To prevent useless bleeding, the surface oil level is preferably less than 40 $\mu$g/cm$^2$ at 20°C. To prevent ice/snow accretion, the surface oil level is preferably 40 $\mu$g/cm$^2$ or higher and more preferably 300 $\mu$g/cm$^2$ or higher at each of 0°C or - 20°C. In this regard, however, even if the level is 40 $\mu$g/cm$^2$ or higher at 20°C or even if the level is 40 $\mu$g/cm$^2$ or lower at 0°C or - 20°C, such values may be acceptable for use.

<Wear Resistance>

The wear resistance of each oil-containing resin layer was evaluated.

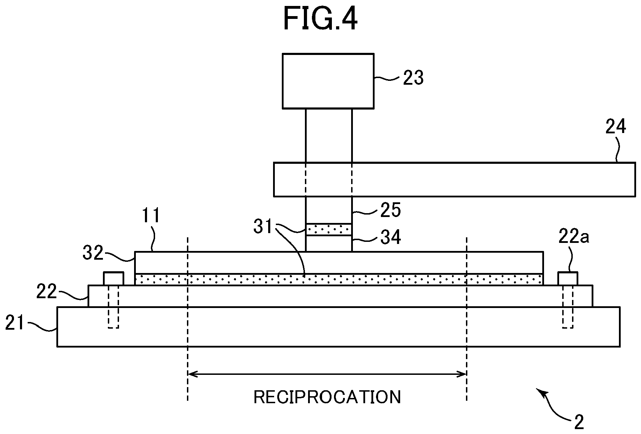

The measurement device used was a fastness rubbing tester (Model: RT-300S; DAIEI KAGAKU SEIKI MFG. Co., Ltd.). Fig. 4 shows a schematic view of the tester. A tester 2 includes: a test table 21; a support plate 22 fixed to the test table 21 using screws 22a, etc.; and a friction block 25 (with a size of 2 cm × 2 cm) disposed above the support body 22 and arranged below a cantilevered load arm 24 onto which a load is applied by a weight 23. Using this tester 2, a reduction rate of each oil-containing resin layer was determined as follows: a test piece 32 of the oil-containing resin layer was attached via an adhesive material 31 (No. 5000NS, manufactured by NITTO DENKO CORPORATION) onto the support plate 22, in particular, a 20 mm × 120 mm area thereof; and a #120-mesh water resistant polishing tool 34 attached via the above adhesive 31 to the underside of the friction block 25 was reciprocated 30 times at a speed of 100 mm/s under pressure applied at 125 g/cm$^2$, which was adjusted by the weight 23 and the load arm 24. The room temperature was set to 20°C.

The criteria were as follows.

◎ ⋯ less than 50%
○ ⋯ from 50% to less than 80%
× ⋯ 80% or higher

The wear resistance is preferably less than 80%, more preferably less than 50%, and still more preferably less than 35%. In this regard, however, the case of even 80% or higher may be acceptable for use.

<Ice Adhesion Strength>

The measurement subject was force required to move an ice mass attached to the oil-containing resin layer under an environment at - 20°C. For convenience, the magnitude of this force was herein defined as "ice adhesion strength."

The ice adhesion strength was measured by the following method.

1. First, a cylindrical ice mass was prepared. The ice mass was prepared by placing a stainless ring (with an inner diameter of 25 mm) on the bottom of a styrene square type case no. 16 (manufactured by AS ONE Corporation), pouring 6 g of pure water into the ring, freezing it at - 20°C for 16 h or longer, and removing the stainless ring after the freezing.

2. Next, a film allowed to stand under an environment at - 20°C for 16 h was attached to a stainless plate provided in parallel to the floor such that the oil-containing resin layer is a superficial layer. Then, the above cylindrical ice mass with an attachment area of 4.9 cm$^2$ was attached.

3. The environment temperature was set to - 20°C. At 3 h after the cylindrical ice mass was attached, the ice mass was pushed at a rate of 0.1 mm/s using a load cell (DPU-50, manufactured by IMADA Co., Ltd.; an attachment jig A-type A-4) in a direction parallel to the floor under an environment at - 20°C. The load applied during 40 s was measured with a force gage (ZTS-50N, manufactured by IMADA Co., Ltd.), and then the maximum load measured was divided by the attachment area 4.9 cm$^2$ to yield a value, which was recorded as the ice adhesion strength. The test was triplicated, and the average value was calculated.

Note that this measurement method was determined with reference to "Investigation on Technology of Preventing Icing (Part I), Reports of Hokkaido Industrial Research Institute No. 292 (1993)." The ice adhesion strength increases approximately proportionally as the surface oil level increases at least at a temperature of - 20°C.

The criteria were as follows.

◎ ··· less than 0.1 N/cm$^2$
○ ··· from 0.1 N/cm$^2$ to less than 1.0 N/cm$^2$
× ··· 1.0 N/cm$^2$ or higher

The smaller the ice adhesion strength value, the better. If less than 1.0 N/cm$^2$, the value should be sufficient for practical use. In this regard, however, the value of even 1.0 N/cm$^2$ or higher may be acceptable for use.

[Examples 2 to 6 and Reference Examples 1 to 6]

Substantially the same procedure as in Example 1 was repeated except that when the first coating material was prepared, the blending ratio among the resin component, the first oil component, and the second oil component was changed.

[Example 7]

Substantially the same procedure as in Example 1 was repeated except that the first coating material was prepared by the following protocol.

1) First Resin precursor

The same first resin precursor as in Example 1 was used.

2) Oil components

The first oil component used was dimethyl siloxane oil (product# KF-96-50CS, manufactured by Shin-Etsu Chemical Co., Ltd. Silicone Division) and the second oil component used was carbinol-modified silicone oil (product# KF-6001, manufactured by Shin-Etsu Chemical Co., Ltd. Silicone Division).

3) Blending

The first resin precursor of 1) and the first oil component and the second oil component of 2) were mixed to produce a first coating material. The blending ratio was set such that the resin component accounted for 60 wt%, the first oil component accounted for 28 wt%, and the second oil component accounted for 12 wt% based on the total weight of the finally formed oil-containing resin layer.

Here, the solubility parameter value for dimethyl siloxane oil as the first oil component is 11.7, the solubility parameter value for carbinol-modified silicone oil as the second oil component is 12.2, and, further, the solubility parameter value for dimethyl polysiloxane rubber as the resin component formed by curing the above-described first resin precursor is 11.9 $(J/cm^3)^{1/2}$.

[Comparative Example 1]

Substantially the same procedure as in Example 1 was repeated except that only the first resin precursor as the first coating material was included and no oil component was included.

[Comparative Example 2]

Substantially the same procedure as in Example 1 was repeated except that the first coating material was prepared by the following protocol.

1) First Resin precursor

The same first resin precursor as in Example 1 was used.

2) Oil components

The first oil component used was methylphenyl siloxane oil (product# AR-20, manufactured by Wacker Asahikasei Silicone Co., Ltd.) and the second oil component used was different methylphenyl siloxane oil (TSF437, manufactured by Momentive Performance Materials Inc.), the SP value of which is different from the SP value for the first oil component.

3) Blending

The first resin precursor of 1) and the first oil component and the second oil component of 2) were mixed using the same protocol as in Example 1 to produce a first coating material. The blending ratio was set such that the resin component accounted for 25 wt%, the first oil component accounted for 56 wt%, and the second oil component accounted for 19 wt% based on the total weight of the finally formed oil-containing resin layer. In addition, the first coating material obtained by the above protocol was cured by the same procedure as in Example 1 to form an oil-containing resin layer with a thickness of about 140 $\mu$m. Then, the resulting oil-containing resin layer was evaluated below. Here, the solubility parameter value for methylphenyl siloxane oil as the first oil component is 12.7 $(J/cm^3)^{1/2}$, the solubility parameter value for methylphenyl siloxane oil as the second oil component is 13.9 $(J/cm^3)^{1/2}$, and, further, the solubility parameter value for dimethyl polysiloxane rubber as the resin component formed by curing the above-described first resin precursor is 11.9 $(J/cm^3)^{1/2}$.

The Table 1 below shows the evaluation results.

Note that with respect to the evaluations of "Phase Separation and Compatibility, etc. (e.g., a change in transmittance)" in the Table, the "First Oil/Second Oil" represents the phase separation and compatibility between the "first oil component" and the "second oil component" corresponding to the above-described a); the "First Oil/Resin" represents the miscibility between the "first oil component" and the "resin component in the oil-containing resin layer" corresponding to the above-described b); and the "Second Oil/Resin" represents the miscibility between the "second oil component" and the "resin component in the oil-containing resin layer" corresponding to the above-described c). Each evaluation result is listed.

[Table 1]

| | Blending Ratio (wt%) | | | Phase Separation and Compatibility, etc. (Change in Transmittance, etc.) | | | Surface Oil Level (μg/cm2) | | | | Wear Resistance (%) | Ice Adhesion Strength (N/cm2) | |
|---|---|---|---|---|---|---|---|---|---|---|---|---|---|
| | Resin component | First oil component | Second oil component | First Oil / Second Oil | First Oil / Resin | Second Oil / Resin | 20 °C | 0 °C | - 20°C | | | - 20°C | |
| Example 1 | 60 | 23 | 17 | ○ | × | ○ | × | ○ | ○ | 100 | ○ | ○ | 0.5 |
| Example 2 | 60 | 20 | 20 | ○ | × | ○ | × | ○ | ○ | 100 | ◎ | ○ | 0.5 |
| Example 3 | 50 | 29 | 21 | ○ | × | ○ | × | ○ | ◎ | 300 | ◎ | ○ | 0.4 |
| Example 4 | 50 | 32 | 18 | ○ | × | ○ | × | ○ | ○ | 100 | ◎ | ○ | 0.5 |
| Example 5 | 50 | 26 | 24 | ○ | × | ○ | × | ○ | ◎ | 300 | ◎ | ○ | 0.2 |
| Example 6 | 40 | 36 | 24 | ○ | × | ○ | × | ○ | ◎ | 300 | ○ | ◎ | <0.1 |
| Example 7 | 60 | 28 | 12 | ○ | × | ○ | × | ○ | ○ | 100 | ◎ | ◎ | <0.1 |
| Reference Example 1 | 80 | 13 | 7 | ○ | × | ○ | × | × | × | <40 | ◎ | × | 1< |
| Reference Example 2 | 70 | 18 | 12 | ○ | × | ○ | × | × | × | <40 | ◎ | × | 1< |
| Reference Example 3 | 25 | 55 | 20 | ○ | × | ○ | ○ | ○ | ◎ | 300 | × | ○ | <0.1 |
| Reference Example 4 | 25 | 52 | 23 | ○ | × | ○ | ○ | ◎ | ◎ | 300 | × | ◎ | <0.1 |
| Reference Example 5 | 25 | 49 | 26 | ○ | × | ○ | ○ | ◎ | ◎ | 300 | × | ◎ | <0.1 |
| Reference Example 6 | 15 | 65 | 20 | ○ | × | ○ | ○ | ◎ | ◎ | 300 | × | ◎ | <0.1 |
| Comparative Example 1 | 100 | 0 | 0 | - | - | - | × | × | × | <40 | ◎ | × | 1< |
| Comparative Example 2 | 25 | 56 | 19 | × | × | ○ | × | ○ | ◎ | 700 | × | ◎ | <0.1 |

With respect to the solubility parameter which is an indicator to determine how easily a solvent and a solute are mixed, in Examples 1 to 6 and Reference Examples 1 to 6, the difference between the solubility parameter value for the resin component in the oil-containing resin layer and the solubility parameter value for the first oil component, that is, $|11.9 - 11.7| = 0.2$ $(J/cm^3)^{1/2}$ is smaller than the difference between the solubility parameter value for the resin component in the oil-containing resin layer and the solubility parameter value for the second oil component, that is, $|11.9 - 13.9| = 2.0$ $(J/cm^3)^{1/2}$. Further, the difference in solubility parameter between the first oil component and the resin component in the oil-containing resin layer 11, that is, $|11.7 - 11.9| = 0.2$ $(J/cm^3)^{1/2}$ is set to be within 0.6 $(J/cm^3)^{1/2}$.

Like in Example 7, the difference between the solubility parameter value for the resin component in the oil-containing resin layer and the solubility parameter value for the first oil component, that is, $|11.9 - 11.7| = 0.2$ $(J/cm^3)^{1/2}$ is smaller than the difference between the solubility parameter value for the resin component in the oil-containing resin layer and the solubility parameter value for the second oil component, that is, $|11.9 - 12.2| = 0.3$ $(J/cm^3)^{1/2}$. Furthermore, the difference in solubility parameter between the first oil component and the resin component of the oil-containing resin layer 11, that is, $|11.7 - 11.9| = 0.2$ $(J/cm^3)^{1/2}$ is set to be within 0.6 $(J/cm^3)^{1/2}$.

Meanwhile, in Comparative Example 2, the difference between the solubility parameter value for the resin component in the oil-containing resin layer and the solubility parameter value for the first oil component, that is, $|11.9 - 12.7| = 0.8$ $(J/cm^3)^{1/2}$ is smaller than the difference between the solubility parameter value for the resin component in the oil-containing resin layer and the solubility parameter value for the second oil component, that is, $|11.9 - 13.9| = 2.0$ $(J/cm^3)^{1/2}$. Here, the difference in solubility parameter between the first oil component and the resin component in the oil-containing resin layer 11, that is, $|12.7 - 11.9| = 0.8$ $(J/cm^3)^{1/2}$ is a value larger than 0.6 $(J/cm^3)^{1/2}$.

With respect to the phase separation and the compatibility, the transmittance of the mixture of the first oil component and the second oil component was significantly changed when the temperature changed from 20°C to 3°C. Thus, it is evident that the first oil component and the second oil component were phase-separated.

The first oil component did not substantially bleed onto the surface of the oil-containing resin layer at a temperature of 20°C or 3°C. Thus, it can be said that the first oil component was miscible with the resin component of the oil-containing resin layer. By contrast, the second oil component bled from the surface of the oil-containing resin layer when the oil-containing resin layer was placed under an environment at 20°C and did not substantially bleed when placed under an environment at 3°C. This behavior corresponds to the phase separation between the first oil component and the second oil component. This result has revealed that the behavior of the second oil component was changed in response to a temperature change in the presence of the first oil component. Further, the second oil component is miscible with the resin component in the surface resin layer under an environment at 20°C, but is immiscible with the resin component in the surface resin layer under an environment at 3°C. This behavior is also clear from the results of the surface oil level.

In the Examples, the surface oil level and the ice adhesion strength were not each a significant value at ordinary temperature such as at 20°C. Once the temperature reached the predetermined value or lower, the surface oil level, for instance, at -20°C was 40 $\mu g/cm^2$ or higher. As a result, the ice adhesion strength was less than 1.0. In addition, the oil component bled from the oil-containing resin layer 11 is primarily the second oil component of the oil components included in the oil-containing resin layer. This configuration enables the prevention of conventional excessive bleeding of the oil component and thus the use of the second oil component to prevent, for instance, ice/snow accretion while preventing useless bleeding.

The above results indicate that the second oil component functions as a low-temperature exuding oil component that can bleed (exude) from a surface of the oil-containing resin layer on the surface resin layer side under an environment at a temperature of a predetermined value or lower.

In addition, in Comparative Example 2, where the first oil component and the second oil component are not phase-separated even at a low temperature, some oil component may bleed (exude) from a surface of the oil-containing resin layer on the surface resin layer side under an environment at a temperature of a predetermined value or lower. However, the first oil component and the second oil component are not phase-separated at the low temperature, and as a result of which the oil components should be included in a large amount to make them bleed. This results in wear resistance of 100%, and the strength of the oil-containing resin layer cannot be made higher. By contrast, in the oil-containing resin layer produced from the coating material of this Example, the first oil component and the second oil component is phase-separated at a low temperature. Thus, even a relatively small amount of oil components may be used to bleed from a surface of the oil-containing resin layer. This makes it possible to increase the content of the resin component, thereby capable of realizing the highly reinforced oil-containing resin layer.

As demonstrated in Example 7, in the case where carbinol-modified silicone oil was used as the second oil component, the ice adhesion strength, in particular, was decreased markedly. This may be because this case is speculated to have higher wettability to the oil-containing resin layer than the case of using phenyl-modified silicone oil as the second oil component.

Note that the temperature at which the second oil component is phase-separated from the first oil component, in other words, the temperature at which the second oil component bleeds from the surface resin layer can be adjusted by selecting the first oil component and the second oil component appropriately. Thus, the second oil component can function as a low-temperature exuding oil component at various temperatures such as at the freezing point or a temperature lower than the freezing point or even at a temperature higher than the freezing point.

[Examples 8 to 20 and Comparative Example 3]

Substantially the same production procedure as in Example 1 was repeated except that with respect to the first coating material, the types and blending ratio among the resin component, the first oil component, and the second oil component was changed as designated in Table 2.

Specifically, in all the Examples 8 to 20 and Comparative Example 3, the resin component used was "dimethyl polysiloxane rubber KE-1935," trade name "KE-1935" (manufactured by Shin-Etsu Chemical Co., Ltd. Silicone Division). In addition, the first oil component used was "dimethyl siloxane KF-96 50CS," trade name "KF-96 50CS" (manufactured by Shin-Etsu Chemical Co., Ltd. Silicone Division).

The second oil component used was

"long-chain alkyl-modified siloxane oil KF-4917," trade name "KF-4917" (manufactured by Shin-Etsu Chemical Co., Ltd. Silicone Division) for Examples 8 to 11;
"epoxy-modified siloxane oil X-22-163," trade name "X-22-163" (manufactured by Shin-Etsu Chemical Co., Ltd. Silicone Division) for Examples 12, 13, and 17;
"carbinol-modified oil KF-6001," trade name "KF-6001" (manufactured by Shin-Etsu Chemical Co., Ltd. Silicone Division) for Examples 14, 15, 19, and 20; or
"methylphenyl siloxane oil TSF437," trade name "TSF437" (manufactured by Momentive Performance Materials Inc.) for Examples 16 and 18 and Comparative Example 3.

Table 2 below shows the evaluation results.

[Table 2]

| | Blending Ratio (wt%) | | | Phase Separation and Compatibility, etc. (Change in Transmittance, etc.) | | | Surface Oil Level (μg/cm2) | | | | Wear Resistance (%) | Ice adhesion Strength (N/cm2) | |
|---|---|---|---|---|---|---|---|---|---|---|---|---|---|
| | Resin component | First oil component | Second oil component | First Oil / Second Oil | First Oil / Resin | Second Oil / Resin | 20 °C | 0 °C | -20°C | | | -20°C | |
| Example 8 | 33 | 6 | 61 | ○ | × | ○ | × | × | ○ | 100 | ○ | ○ | 0.1 |
| Example 9 | 33 | 12 | 55 | ○ | × | ○ | × | × | × | <40 | ○ | ○ | 0.3 |
| Example 10 | 33 | 19 | 48 | ○ | × | ○ | × | × | × | <40 | ○ | ○ | 0.5 |
| Example 11 | 33 | 25 | 42 | ○ | × | ○ | × | × | × | <40 | ○ | ○ | 0.6 |
| Example 12 | 40 | 52 | 8 | ○ | × | ○ | × | ○ | ◎ | 300 | ○ | ○ | 0.1 |
| Example 13 | 40 | 53 | 7 | ○ | × | ○ | × | ○ | ○ | 100 | ○ | ○ | 0.2 |
| Example 14 | 40 | 42 | 18 | ○ | × | ○ | × | ◎ | ◎ | 1000 | ○ | ◎ | <0.1 |
| Example 15 | 40 | 47 | 13 | ○ | × | ○ | × | ◎ | ◎ | 700 | ○ | ◎ | <0.1 |
| Example 16 | 40 | 36 | 24 | ○ | × | ○ | × | ○ | ◎ | 300 | ○ | ○ | 0.1 |
| Example 17 | 40 | 56 | 4 | ○ | × | ○ | × | × | × | <50 | ○ | ○ | 0.8 |
| Example 18 | 40 | 42 | 18 | ○ | × | ○ | × | × | ○ | 100 | ○ | ○ | 0.3 |
| Example 19 | 40 | 51 | 9 | ○ | × | ○ | × | × | ◎ | 300 | ○ | ◎ | <0.1 |
| Example 20 | 40 | 56 | 4 | ○ | × | ○ | × | × | × | <50 | ○ | ○ | 0.8 |
| Comparative Example 3 | 40 | 48 | 12 | ○ | × | ○ | × | × | × | <50 | ○ | × | 1 |

EP 3 878 916 A1

The following items were further evaluated for the Examples, etc.

<Solubility parameter Contribution>

The solubility parameter contribution "F" was calculated by the following formula:

$$F = f \times \phi \times 100.$$

Here, f can be calculated by the formula below using the "solubility parameter contributions" ($f_{d1}$, $f_{p1}$, $f_{h1}$) of "molecular units (compatible molecular units) as components of the monomer structure most abundant in the oil-containing resin layer" and the "solubility parameter contributions" ($f_{d2}$, $f_{p2}$, $f_{h2}$) of "molecular units (incompatible molecular units) as components of the monomer structure in the second oil component with a difference in the solubility parameter from the above compatible molecular units being 0.01 $(J/cm^3)^{1/2}$ or more."

$$f = ((f_{d1} \cdot f_{d2})^2 + (f_{p1} \cdot f_{p2})^2 + (f_{h1} \cdot f_{h2})^2)^{0.5}$$

Note that in the case of there being multiple incompatible molecular units, the respective contributions are averaged to determine the above f. In addition, the solubility parameter contributions $f_d$, $f_p$, and $f_h$ can each be calculated by the following formulas:

$$f_d = \delta_d/(\delta_d + \delta_p + \delta_h);$$

$$f_p = \delta_p/(\delta_d + \delta_p + \delta_h);$$

and

$$f_h = \delta_h/(\delta_h + \delta_p + \delta_h).$$

In addition, $\phi$ means the weight fraction of the incompatible component, and can be calculated by the following formula:

$$\phi = (1 - \text{Gel fraction}) \times \text{Weight ratio of an incompatible molecular}$$

$$\text{unit included in an oil component.}$$

The gel fraction may be determined by the following procedure.

1. An oil-containing resin layer is cut into a 2.0 cm $\times$ 4.5 cm piece, which is then weighed.
2. The oil-containing resin layer is put into a vial filled with 20 g of toluene, and is immersed in the toluene at room temperature for 24 hours.
3. The oil-containing resin layer is collected and dried by heating in a fan dryer at 150°C for 2 hours. After that, the residue is weighed.
4. The gel fraction was calculated by the following formula:

$$\text{Gel fraction} = \text{Weight (g) of residue after dried by heating} / \text{Weight (g)}$$

$$\text{of oil-containing resin layer before dried by heating.}$$

The "Weight ratio of an incompatible molecular unit included in an oil component" may be calculated by NMR measurement using all the oil components including both the first oil component and the second oil component included in the oil-containing resin layer. All the oil components including both the first oil component and the second oil component can be obtained by the following procedure.

1. An oil-containing resin layer is cut into a 2.0 × 4.5 cm piece, which is put into a vial filled with 20 g of toluene, and is immersed in the toluene at room temperature for 24 hours.

2. The oil-containing resin layer is collected from the vial and dried in a fan dryer at 150°C for 12 h to recover a residue. This residue is all the oil components including both the first oil component and the second oil component.

<Wettability Parameter>

The wettability parameter "Z" can be determined as an absolute value for the difference between the solubility parameter value for the oil-containing resin layer, which is formed by curing the first resin precursor, and the solubility parameter value for the second oil component. The solubility parameter for the oil-containing resin layer is calculated, using the weight fraction, as the weight average of the respective solubility parameters for the resin component, the first oil component, and the second oil component.

<UV Resistance>

The UV resistance of each oil-containing resin layer was evaluated as follows.

The tester used was a super xenon weather meter (model: SX75; Suga Test Instruments Co., Ltd.). A test film piece (with a size: 55 mm × 130 mm), which was cut into a size of a sample holder, was placed in the tester, and was irradiated with UV light (at a wavelength of from 300 nm to 400 nm). The test protocol was implemented with reference to JIS D0205, test method of weatherability for automotive parts. The annual average UV (wavelength: from 300 nm to 400 nm) irradiation exposure level was set to 306 kW/m$^2$. Then, the test film piece was irradiated at this irradiation exposure level. Since the summer season was simulated, the test ambient temperature was set at an in-tester ambient temperature of 30°C, a test piece back-surface temperature of 55°C, a humidity of 55%RH, and a rotation rate of 1 rotation/min.

The first oil component and the second oil component remaining in the test film piece after UV irradiation were extracted. Then, a change in the ratio between the first oil component and the second oil component was used to calculate a reduction rate of the second oil component between before and after the UV irradiation. Here, it has been confirmed that the first component oil does not decrease after the UV irradiation.

How to extract the first oil and the second oil from the film and how to calculate the second oil reduction rate are as follows.

1. Each film is cut into a 20 mm × 40 mm piece, which is placed in a screw bottle.

2. About 30 g of chloroform is put into the screw bottle, which is then capped.

3. A shaker (a double action lab shaker SRR-2; AS ONE Corporation) is used to shake the bottle at 100 rpm for 15 hours. Then, the oil remaining in the film is extracted.

4. A solid remaining in the screw bottle is removed.

5. The extracted oil-containing chloroform is dried in a drier at 100°C for 2 h to prepare a mixture of the first oil and the second oil.

6. About 3 mg of the resulting mixture of the first oil and the second oil and about 700 mg of deuterated chloroform are collected into a vial to prepare a mixed solution.

7. The mixed solution is transferred to an NMR sample tube.

8. An NMR device (model: ULTRASHIELD 300, manufactured by BRUKER Inc.) is used to measure 1H NMR. Then, the results are assigned to each molecular structure of the second component oil.

9. A change in the H count in Si-CH$_3$ between before and after UV irradiation is used to calculate the reduction rate of the second component oil due to the UV irradiation.

The criteria are as follows.

1 ... the second component oil reduction rate of less than 10%

2 ··· the second component oil reduction rate of from 10 to less than 30%

3 ··· the second component oil reduction rate of from 30 to less than 50%

<Water Resistance>

The water resistance of each oil-containing resin layer was evaluated as follows.

The test device used was a rain tester (manufactured by NISHIYAMA-SEISAKUSHO Co, Ltd.). A test piece of film (size: 150 mm × 150 mm) was placed, and the film was subject to rainfall from the above of film in an amount corresponding to the annual precipitation. The annual precipitation was set to 1600 mm in view of the Meteorological Agency data. The test environment temperature was set to an ambient temperature of 5°C in the tester, a precipitation temperature of 5°C, and a rainfall rate of about 500 mm/h while a rainy day in the winter was simulated.

The first oil component and the second oil component remaining in the test piece of film after the water resistance test were extracted. Then, a change in the ratio between the first oil component and the second oil component was used to calculate a reduction rate of the second oil component between before and after the water resistance test. Here, it has been confirmed that the first component oil does not decrease during the water resistance test.

How to extract the first oil and the second oil from the film, how to calculate the second oil reduction rate, and the criteria were substantially the same as in the previous section <UV Resistance>.

Table 3 below shows the evaluation results. For convenience, Table 3 also lists the composition of each oil-containing resin layer, that is, the resin component, the first oil component, and the second oil component.

[Table 3]

| | Solubility parameter Contribution (F) | Wettability Parameter (Z) | UV Resistance | Water Resistance | Composition | | |
|---|---|---|---|---|---|---|---|
| | | | | | Resin component | First oil component | Second oil component (Incompatible Oil) |
| Example 1 | 0.64 | 1.4 | 2 | 1 | Dimethyl Polysiloxane Rubber (Sylgard184) | Dimethyl Siloxane Oil (KF-96-100CS) | Methylphenyl Siloxane Oil (TSF437) |
| Example 2 | 0.75 | 1.4 | 2 | 1 | Dimethyl Polysiloxane Rubber (Sylgard184) | Dimethyl Siloxane Oil (KF-96-100CS) | Methylphenyl Siloxane Oil (TSF437) |
| Example 3 | 0.79 | 1.3 | 2 | 1 | Dimethyl Polysiloxane Rubber (Sylgard184) | Dimethyl Siloxane Oil (KF-96-100CS) | Methylphenyl Siloxane Oil (TSF437) |
| Example 4 | 0.68 | 1.4 | 2 | 1 | Dimethyl Polysiloxane Rubber (Sylgard184) | Dimethyl Siloxane Oil (KF-96-100CS) | Methylphenyl Siloxane Oil (TSF437) |
| Example 5 | 0.90 | 1,3 | 2 | 1 | Dimethyl Polysiloxane Rubber (Sylgard184) | Dimethyl Siloxane Oil (KF-96-100CS) | Methylphenyl Siloxane Oil (TSF437) |
| Example 6 | 0.90 | 1.3 | 2 | 1 | Dimethyl Polysiloxane Rubber (Sylgard184) | Dimethyl Siloxane Oil (KF-96-100CS) | Methylphenyl Siloxane Oil (TSF437) |
| Example 7 | 1.14 | 1.5 | 2 | 1 | Dimethyl Polysiloxane Rubber (Sylgard184) | Dimethyl Siloxane (KF-96 50CS) | Carbinol-modified Oil (KF-6001) |
| Reference Example 1 | 0.26 | 1.6 | 1 | 1 | Dimethyl Polysiloxane Rubber (Sylgard184) | Dimethyl Siloxane Oil (KF-96-100CS) | Methylphenyl Siloxane Oil (TSF437) |
| Reference Example 2 | 0.45 | 1.5 | 1 | 1 | Dimethyl Polysiloxane Rubber (Sylgard184) | Dimethyl Siloxane Oil (KF-96-100CS) | Methylphenyl Siloxane Oil (TSF437) |
| Reference Example 3 | 0.75 | 1.4 | 3 | 2 | Dimethyl Polysiloxane Rubber (Sylgard184) | Dimethyl Siloxane Oil (KF-96-100CS) | Methylphenyl Siloxane Oil (TSF437) |

| | | | | | | | |
|---|---|---|---|---|---|---|---|
| Reference Example 4 | 0.86 | 1.3 | 3 | 2 | Dimethyl Polysiloxane Rubber (Sylgard184) | Dimethyl Siloxane Oil (KF-96-100CS) | Methylphenyl Siloxane Oil (TSF437) |
| Reference Example 5 | 0.98 | 1.3 | 3 | 2 | Dimethyl Polysiloxane Rubber (Sylgard184) | Dimethyl Siloxane Oil (KF-96-100CS) | Methylphenyl Siloxane Oil (TSF437) |
| Reference Example 6 | 0.75 | 1.4 | 3 | 2 | Dimethyl Polysiloxane Rubber (Sylgard184) | Dimethyl Siloxane Oil (KF-96-100CS) | Methylphenyl Siloxane Oil (TSF437) |
| Comparative Example 1 | – | – | 1 | 1 | Dimethyl Polysiloxane Rubber (Sylgard184) | None | None |
| Comparative Example 2 | – | – | 2 | 1 | Dimethyl Polysiloxane Rubber (Sylgard184) | Methylphenyl Siloxane Oil (AR-20) | Methylphenyl Siloxane Oil (TSF437) |
| Example 8 | 2.20 | 0.3 | 1 | 1 | Dimethyl Polysiloxane Rubber (KE-1935) | Dimethyl Siloxane (KF-96 50CS) | Long-chain Alkyl-modified Siloxane Oil (KF-4917) |
| Example 9 | 1.95 | 0.4 | 1 | 1 | Dimethyl Polysiloxane Rubber (KE-1935) | Dimethyl Siloxane (KF-96 50CS) | Long-chain Alkyl-modified Siloxane Oil (KF-4917) |
| Example 10 | 1.73 | 0.4 | 1 | 1 | Dimethyl Polysiloxane Rubber (KE-1935) | Dimethyl Siloxane (KF-9650CS) | Long-chain Alkyl-modified Siloxane Oil (KF-4917) |
| Example 11 | 1.51 | 0.5 | 1 | 1 | Dimethyl Polysiloxane Rubber (KE-1935) | Dimethyl Siloxane (KF-96 50CS) | Long-chain Alkyl-modified Siloxane Oil (KF-4917) |
| Example 12 | 2.08 | 3.2 | 3 | 3 | Dimethyl Polysiloxane Rubber (KE-1935) | Dimethyl Siloxane (KF-96 50CS) | Epoxy-modified Siloxane Oil (X-22-163) |
| Example 13 | 1.82 | 3.3 | 3 | 3 | Dimethyl Polysiloxane Rubber (KE-1935) | Dimethyl Siloxane (KF-96 50CS) | Epoxy-modified Siloxane Oil (X-22-163) |
| Example 14 | 1.71 | 0.4 | 2 | 2 | Dimethyl Polysiloxane Rubber (KE-1935) | Dimethyl Siloxane (KF-9650CS) | Carbinol-modified Oil (KF-6001) |

| | | | | | | | |
|---|---|---|---|---|---|---|---|
| Example 15 | 1.24 | 0.4 | 2 | 2 | Dimethyl Polysiloxane Rubber (KE-1935) | Dimethyl Siloxane (KF-96 50CS) | Carbinol-mo dified Oil (KF-6001) |
| Example 16 | 0.90 | 1.3 | 1 | 1 | Dimethyl Polysiloxane Rubber (KE-1935) | Dimethyl Siloxane (KF-9650CS) | Methylphenyl Siloxane Oil (TSF437) |
| Example 17 | 1.04 | 3.4 | 3 | 3 | Dimethyl Polysiloxane Rubber (KE-1935) | Dimethyl Siloxane (KF-96 50CS) | Epoxy-modified Siloxane Oil (X-22-163) |
| Example 18 | 0.68 | 1.4 | 1 | 1 | Dimethyl Polysiloxane Rubber (KE-1935) | Dimethyl Siloxane (KF-96 50CS) | Methylphenyl Siloxane Oil (TSF437) |
| Example 19 | 0.86 | 0.5 | 2 | 2 | Dimethyl Polysiloxane Rubber (KE-1935) | Dimethyl Siloxane (KF-9650CS) | Carbinol-mo dified Oil (KF-6001) |
| Example 20 | 0.38 | 0.5 | 1 | 2 | Dimethyl Polysiloxane Rubber (KE-1935) | Dimethyl Siloxane (KF-96 50CS) | Carbinol-mo dified Oil (KF-6001) |
| Comparative Example 3 | 0.45 | 1.5 | 1 | 1 | Dimethyl Polysiloxane Rubber (KE-1935) | Dimethyl Siloxane (KF-96 50CS) | Methylphenyl Siloxane Oil (TSF437) |

<Oil Level with Ice adhesion strength of 0.15 N/cm$^2$>

The oil level with ice adhesion strength of 0.15 N/cm$^2$ was estimated by changing the ratio of the first oil component and the second oil component while the prescribed blending ratio (wt%) of the resin component among the resin component, the first oil component, and the second oil component was kept constant. Table 4 below shows the evaluation results. Note that like Table 3, Table 4 also lists the composition of each oil-containing resin layer, that is, the resin component, the first oil component, and the second oil component.

[Table 4]

| | Biending Ratio of Resin (wt%) | Composition | | | Oil Level with Ice adhesion Strength of 0.15 N/cm$^2$ |
|---|---|---|---|---|---|
| | | Resin component | First oil component | Second oil component (Incompatible Oil) | |
| 1 | 40 | Dimethyl Polysiloxane Rubber (KE-1935) | Dimethyl Siloxane (KF-96 50CS) | Epoxy-modified Siloxane Oil (X-22-163) | 200 |

(continued)

| | Biending Ratio of Resin (wt%) | Composition | | | Oil Level with Ice adhesion Strength of 0.15 N/cm$^2$ |
|---|---|---|---|---|---|
| | | Resin component | First oil component | Second oil component (Incompatible Oil) | |
| 2 | 40 | Dimethyl Polysiloxane Rubber (KE-1935) | Dimethyl Siloxane (KF-96 50CS) | Carbinol-modified Oil (KF-6001) | 50 |
| 3 | 60 | Dimethyl Polysiloxane Rubbe (Sylgard 184) | Dimethyl Siloxane (KF-96 50CS) | Carbinol-modified Oil (KF-6001) | 50 |
| 4 | 33 | Dimethyl Polysiloxane Rubbe (KE-1935) | Dimethyl Siloxane (KF-96 50CS) | Long-chain Alkyl-modified Siloxane Oil (KF-4917) | 50 |
| 5 | 15 | Dimethyl Polysiloxane Rubber (Sylgard 184) | Dimethyl Siloxane Oil (KF-96-100CS) | Methylphenyl Siloxane Oil (TSF437) | 280 |
| 6 | 25 | Dimethyl Polysiloxane Rubbe (Sylgard184) | Dimethyl Siloxane Oil (KF-96-100CS) | Methylphenyl Siloxane Oil (TSF437) | 280 |
| 7 | 40 | Dimethyl Polysiloxane Rubbe (KE-1935) | Dimethyl Siloxane (KF-96 50CS) | Methylphenyl Siloxane Oil (TSF437) | 280 |
| 8 | 50 | Dimethyl Polysiloxane Rubbe (Sylgard184) | Dimethyl Siloxane Oil (KF-96-100CS) | Methylphenyl Siloxane Oil (TSF437) | 280 |
| 9 | 60 | Dimethyl Polysiloxane Rubber (Sylgard184) | Dimethyl Siloxane Oil (KF-96-100CS) | Methylphenyl Siloxane Oil (TSF437) | 280 |
| 10 | 70 | Dimethyl Polysiloxane Rubbe (Sylgard184) | Dimethyl Siloxane Oil (KF-96-100CS) | Methylphenyl Siloxane Oil (TSF437) | 280 |

(continued)

| | Biending Ratio of Resin (wt%) | Composition | | | Oil Level with Ice adhesion Strength of 0.15 N/cm$^2$ |
| --- | --- | --- | --- | --- | --- |
| | | Resin component | First oil component | Second oil component (Incompatible Oil) | |
| 11 | 80 | Dimethyl Polysiloxane Rubbe (Sylgard184) | Dimethyl Siloxane Oil (KF-96-100CS) | Methylphenyl Siloxane Oil (TSF437) | 2 8 0 |

The above results have clearly demonstrated that in the case of using, as the second oil component, long-chain alkyl-modified siloxane oil or carbinol-modified silicone oil, even a small oil amount of 50 μg/cm$^2$ can cause a low ice adhesion strength, that is, an increased snow accretion/icing preventive characteristic.

Collectively, the present invention can provide a product capable of preventing icing and/or snow accretion, in particular, a coating material and a film that can be used in a more flexible form than a sheet and others having a fixed shape from the beginning of use.

It should be understood that the above description involves preferred embodiments and simply represents articles. It can be recognized that altered and modified distinct embodiments are readily made clear to those skilled in the art in light of the above teachings. Thus, exemplified embodiments and alternative embodiments can be implemented without departing from the spirit of articles set forth in the Claims attached.

Reference Signs List

10    Structure
11    Oil-containing resin layer
12    Surface resin layer

**Claims**

1.    A coating material comprising:

a first oil component;
a second oil component; and
a first resin precursor that is a precursor for a resin component, wherein
the first resin precursor comprising the first and second oil components is cured to form an oil-containing resin layer comprising the first and second oil components and the resin component; and
the second oil component constitutes a low-temperature phase-separable oil component that can be phase-separated from the first oil component to exude from the oil-containing resin layer when a temperature decreases to a predetermined value or lower.

2.    The coating material according to claim 1, wherein with respect to the first and second oil components, a difference between a solubility parameter value (SP value) for the resin component in the oil-containing resin layer formed by curing the first resin precursor and a solubility parameter value for the first oil component is smaller than a difference between a solubility parameter value (SP value) for the resin component in the oil-containing resin layer and a solubility parameter value for the second oil component.

3.    The coating material according to claim 1 or 2, wherein the first resin precursor is a wet curable material that is cured by moisture.

4.    The coating material according to claim 1 or 2, wherein the first resin precursor is a UV curable material that is cured by UV irradiation.

5. The coating material according to claim 1 or 2, wherein the first resin precursor is a heat curable material that is cured by heating.

6. The coating material according to claim 1 or 2, wherein the first resin precursor is cured by adding a curing agent that causes a cross-linking reaction with the first resin precursor.

7. A combination of the coating material according to claim 6 and a liquid curing agent that cures the first resin precursor through a cross-linking reaction with the first resin precursor in the coating material.

8. The coating material according to any one of claims 1 to 7, wherein
a content of the resin component in the oil-containing resin layer is 25 wt% or more based on a total weight of the oil-containing resin layer.

9. The coating material according to claim 8, wherein
a content of the second oil component is 3 wt% or more based on a total weight of the oil-containing resin layer.

10. The coating material according to any one of claims 1 to 9, further comprising

a second resin precursor used to form a surface resin layer by curing on the oil-containing resin layer formed by curing the first resin precursor, wherein
the surface resin layer has enough oil permeability to permeate the low-temperature phase-separable oil component exuding from the oil-containing resin layer to a surface of the surface resin layer that is opposite to a side of the oil-containing resin layer.

11. The coating material according to claim 10, wherein the surface resin layer has higher wear resistance than the oil-containing resin layer.

12. The coating material according to any one of claims 1 to 11, wherein a surface oil level at - 20°C is 40 $\mu$g/cm$^2$ or higher.

13. The coating material according to any one of claims 1 to 12, wherein a difference in solubility parameter between the first oil component and the resin component in the oil-containing resin layer is within 0.6 (J/cm$^3$)$^{1/2}$.

14. The coating material according to any one of claims 1 to 13, wherein the predetermined value is a freezing point.

15. The coating material according to any one of claims 1 to 12, wherein
a wettability parameter, which can be calculated as an absolute value for a difference between a solubility parameter value (SP value) for the oil-containing resin layer formed by curing the first resin precursor and a solubility parameter value (SP value) for the second oil component, is 1.5 (J/cm$^3$)$^{1/2}$ or lower.

16. The coating material according to any one of claims 1 to 12, wherein
a solubility parameter contribution of the oil-containing resin layer formed by curing the first resin precursor is 0.1 or higher.

17. A film comprising an oil-containing resin layer comprising first and second oil components, wherein
the second oil component constitutes a low-temperature phase-separable oil component that can be phase-separated from the first oil component to exude from the oil-containing resin layer when a temperature decreases to a predetermined value or lower.

18. The film according to claim 17, wherein with respect to the first and second oil components, a difference between a solubility parameter value (SP value) for a resin component in the oil-containing resin layer and a solubility parameter value (SP value) for the first oil component is smaller than a difference between a solubility parameter value (SP value) for the resin component in the oil-containing resin layer and a solubility parameter value (SP value) for the second oil component.

19. The film according to claim 17 or 18, wherein
a content of the resin component in the oil-containing resin layer is 25 wt% or more based on a total weight of the oil-containing resin layer.

**20.** The film according to claim 19, wherein
a content of the second oil component is 3 wt% or more based on a total weight of the oil-containing resin layer.

**21.** The film according to any one of claims 17 to 20, further comprising

a surface resin layer on the oil-containing resin layer, wherein
the surface resin layer has enough oil permeability to permeate the low-temperature phase-separable oil component exuding from the oil-containing resin layer to a surface of the surface resin layer that is opposite to a side of the oil-containing resin layer.

**22.** The film according to claim 21, wherein the surface resin layer has higher wear resistance than the oil-containing resin layer.

**23.** The film according to any one of claims 17 to 22, wherein a surface oil level at -20°C is 40 $\mu$g/cm$^2$ or higher.

**24.** The film according to any one of claims 17 to 23, wherein a difference in solubility parameter between the first oil component and a resin component in the oil-containing resin layer is within 0.6 (J/cm$^3$)$^{1/2}$.

**25.** The film according to any one of claims 17 to 24, wherein the predetermined value is a freezing point.

**26.** The film according to any one of claims 17 to 25, wherein a wettability parameter, which can be calculated as an absolute value for a difference between a solubility parameter value (SP value) for the oil-containing resin layer and a solubility parameter value (SP value) for the second oil component, is 1.5 (J/cm$^3$)$^{1/2}$ or lower.

**27.** The film according to any one of claims 17 to 26, wherein a solubility parameter contribution of the oil-containing resin layer is 0.1 or higher.

# FIG.1

| | |
|---|---|
| OIL-CONTAINING RESIN LAYER | 11 |
| STRUCTURE | 10 |

# FIG.2

| | |
|---|---|
| SURFACE RESIN LAYER | 12 |
| OIL-CONTAINING RESIN LAYER | 11 |
| STRUCTURE | 10 |

# FIG.3

# FIG.4

RECIPROCATION

**INTERNATIONAL SEARCH REPORT**

| International application No. |
| --- |
| PCT/JP2019/044131 |

A. CLASSIFICATION OF SUBJECT MATTER
Int.Cl. C09D201/00(2006.01)i, C09D7/65(2018.01)i

According to International Patent Classification (IPC) or to both national classification and IPC

B. FIELDS SEARCHED

Minimum documentation searched (classification system followed by classification symbols)
Int.Cl. C09D201/00, C09D7/65

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-106228 A (3M INNOVATIVE PROPERTIES COMPANY) 08 April 2004, entire text & US 2004/0101690 A1, entire text & WO 2004/024803 A1 | 1-27 |
| A | JP 2003-328308 A (MITSU-UMA CO., LTD.) 19 November 2003, entire text (Family: none) | 1-27 |
| A | JP 2002-114941 A (NIPPON PAINT CO., LTD.) 16 April 2002, entire text (Family: none) | 1-27 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 December 2019 (19.12.2019) | 07 January 2020 (07.01.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/044131 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-40338 A (JSR CORPORATION) 13 February 2001, entire text (Family: none) | 1-27 |
| A | JP 2001-181509 A (CHUGOKU MARINE PAINTS, LTD.) 03 July 2001, entire text & US 2002/0197490 A1, entire text & EP 1092758 A2 | 1-27 |
| A | JP 10-298434 A (NATOCO PAINT CO., LTD.) 10 November 1998, entire text & US 6440572 B1, entire text & EP 978541 A1 | 1-27 |
| A | JP 7-148879 A (SHIN-ETSU CHEMICAL CO., LTD.) 13 June 1995, entire text (Family: none) | 1-27 |

Form PCT/ISA/210 (continuation of second sheet) (January 2015)

**EP 3 878 916 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7148879 A
- JP 2003328308 A
- JP 6245714 B